# EUROPÄISCHE PATENTSCHRIFT

(11) **EP 1 669 825 B1**
(45) Veröffentlichungstag und Bekanntmachung des Hinweises auf die Patenterteilung: **09.01.2008**
(21) Anmeldenummer: 05110583.1
(22) Anmeldetag: 10.11.2005
(51) Int. Cl.: G05B 19/05

(54) **Verfahren und Vorrichtung zur Zuordnung einer Steckplatznummer und/oder von Konfigurierungsdaten zu einer Baugruppe**
Method and apparatus for assigning a slotnumber and/or configuration data to a module
Procédé et dispositif d'affectation d'un numéro de logement d'extension et/ou des données de configuration à un module

(30) Priorität: 08.12.2004 DE 102004059719
(43) Veröffentlichungstag der Anmeldung: 14.06.2006
(73) Patentinhaber: SIEMENS AKTIENGESELLSCHAFT, 80333 München (DE)
(72) Erfinder: Temming, Rudolf, 38154, Königslutter (DE)

(56) Entgegenhaltungen:
- DE-A1- 4 114 921
- DE-A1- 10 040 866
- US-A- 5 485 590
- US-A- 5 659 705
- LENNARTZ K: "SIGNALTECHNISCH SICHERE DATENUEBERTRAGUNG IM RAHMEN VON CIRNET" 1. April 1993 (1993-04-01), SIGNAL + DRAHT, TELZLAFF VERLAG GMBH. DARMSTADT, DE, PAGE(S) 96-101 , XP000380305 ISSN: 0037-4997 * Absatz [03.4] *
- RIVEST R L ED - MENEZES A J ET AL INTERNATIONAL ASSOCIATION FOR CRYPTOLOGIC RESEARCH: "THE MD4 MESSAGE DIGEST ALGORITHM" 30. Dezember 1991 (1991-12-30), ADVANCES IN CRYPTOLOGY - PROCEEDINGS OF CRYPTO. SANTA BARBARA, AUG. 11, PAGE(S) 303-311 , XP000260021 * Zusammenfassung * * Seite 304, Absatz 3 *
- "ST24C04, ST25C04, ST24W04, ST25W04, 4kBit Serial I2C Bus EEPROM with user defined Block Write Protection" Februar 1999 (1999-02), ANNOUNCEMENT ST MICROELECTRONICS, PAGE(S) 1-16 , XP002206612 * das ganze Dokument *

## Beschreibung

Die Erfindung betrifft ein Verfahren zur Zuordnung einer Steckplatznummer und von Konfigurierungsdaten zu einer Baugruppe gemäß dem Oberbegriff des Anspruchs 1 und eine diesbezügliche Vorrichtung gemäß dem Oberbegriff des Anspruchs 2.

Sicherheitsrelevante Bahnbetriebsprozesse betreffen insbesondere die Ansteuerung von Feldelementen, beispielsweise Weichen und Signale. Dazu dienen Stellwerkselemente, die mit feldelementspezifischen Baugruppen bestückt werden. Die Nummer des Steckplatzes, d. h. die Steckplatzkodierung der Baugruppe muss eindeutig sein, damit sichergestellt ist, dass die gesteckte Baugruppe zu dem anzusteuernden Feldelement und den Konfigurierungsdaten passt. Die Steckplatznummer und die Konfigurierungsdaten müssen daher signaltechnisch sicher der entsprechenden Baugruppe zugeordnet werden.

Bisher wird die Nummer des Steckplatzes durch mindestens zwei voneinander unabhängigen Kodierschaltern eingestellt. Nachteilig bei diesen Kodierschaltern ist vor allem deren erheblicher Hardwareaufwand, verbunden mit mechanischer Empfindlichkeit.

Aus der US-A-5 659 705 ist eine speicherprogrammierbare Steuerung mit einem herausnehmbaren Programmspeicher bekannt, wodurch eine Anpassung an andere Parameter möglich ist. Bei der Implementierung eines Datensatzes in die speicherprogrammierbare Steuerung ist eine Prüfsummenbildung vorgesehen.

Der Erfindung liegt die Aufgabe zugrunde, ein Verfahren und eine Vorrichtung gattungsgemäßer Art anzugeben, die sich durch geringeren Hardwareaufwand auszeichnen, wobei die Steckplatzkodierung und die Konfigurierung die Sicherheitsanforderungsstufe SIL 4 nach CENELEC erfüllen.

Die Aufgabe wird verfahrensgemäß mit den kennzeichnenden Merkmalen des Anspruches 1 und vorrichtungsgemäß mit den kennzeichnenden Merkmalen des Anspruches 2 gelöst. Durch das Einschreiben der Steckplatznummer und der Konfigurierungsdaten zusammen mit einem Sicherungsanhang in einen nichtflüchtigen Speicher ist eine sehr hohe Sicherheit bezüglich der Korrektheit der Steckplatznummer und der Konfigurierungsdaten und damit der entsprechenden Auswirkungen auf den sicherheitsrelevanten Bahnbetriebsprozess gegeben. Ein weiterer Vorteil gegenüber dem bekannten Kodierschalter besteht darin, dass neben der Steckplatznummer und den Konfigurierungsdaten Teilnehmernummern und gegebenenfalls weitere Daten, beispielsweise Stromfensterdaten, gespeichert werden können. Darüber hinaus ist bei mechanischer Unempfindlichkeit und geringem Volumen des Speichermoduls nur minimaler Hardwareaufwand erforderlich. Der Datensatz, bestehend aus Steckplatznummer, Konfigurierungsdaten, Teilnehmernummer und gegebenenfalls Stromfensterdaten sowie Sicherungsanhang, lässt sich über eine serielle I2C Schnittstelle sehr einfach und mit besonders geringem Aufwand in den nichtflüchtigen Speicher einlesen. Da üblicherweise mehrere Komponenten parallel an einem I2C-Bus hängen, ist es nötig, auch die Teilnehmernummer zu speichern. Der I2C-Bus ist ein sehr häufig eingesetzter 2-Draht-Bus und wurde speziell für die Kommunikation zwischen einzelnen Komponenten innerhalb eines Gerätes entwickelt. Vorteilhafterweise wird auch zwischen dem Speicher und der Baugruppe ein I2C-Bus eingesetzt, wobei die Baugruppe den Datensatz zweikanalig mittels des Sicherungsanhanges auf Datenintegrität überprüft.

Vorzugsweise ist der Sicherungsanhang gemäß Anspruch 3 als MD4-Signatur (Message Digest) ausgebildet. Durch die kryptografische MD4-Funktion wird der Eingabedatensatz in einen kurzen Wert fester Länge, den Hashwert, umgewandelt. Bei diesem Algorithmus verändern sich Variablen mittels nichtlinearer Transformationen anhand der Eingabedaten, d. h. des auf Datenintegrität zu prüfenden Datensatzes, und bilden dadurch einen eindeutigen Hashwert. Bei einer guten Hashfunktion gibt es kaum zwei Datensätze, die denselben Hashwert besitzen. Weiterhin beeinflussen geringe Änderungen des Eingabedatensatzes bei einer guten Hashfunktion den Hashwert sehr stark. Bei dem MD4-Algorithmus sind vier Variablen vorgesehen, die in drei Runden in die Berechnung des Hashwertes eingehen. Um noch größere Sicherheit hinsichtlich des Nachweises der Datenintegrität zu erreichen, kann auch eine höhere Version des MD-Algorithmus, beispielsweise MD5 eingesetzt werden. Es können auch andere Verfahren zur Sicherung genutzt werden, beispielsweise CRC16 oder CRC32. Der Sicherungsanhang wird über den gesamten Datensatz gebildet.

Als nichtflüchtiger Speicher wird gemäß Anspruch 4 vorzugsweise ein EEPROM (electrically erasable programmable read only memory) eingesetzt. Dieser Festwertspeicher zeichnet sich dadurch aus, dass der Programmiervorgang und auch der Löschvorgang sehr einfach mittels eines Computers oder eines Peripheriegerätes möglich sind. Auch andere nichtflüchtige Speicher können eingesetzt werden.

Nachfolgend wird die Erfindung anhand einer figürlichen Darstellung näher erläutert.

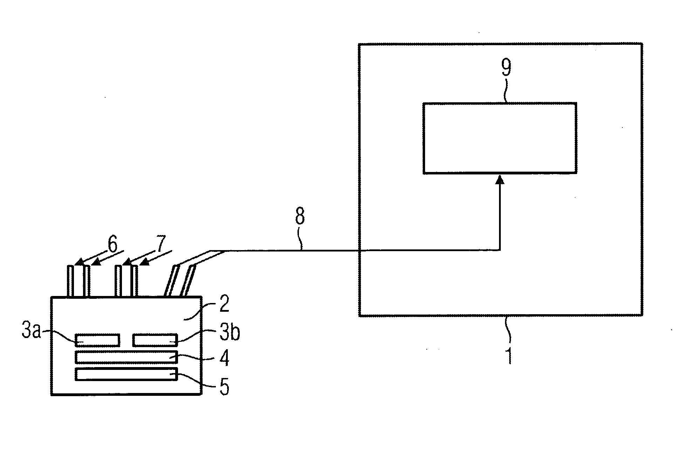

Die Figur zeigt eine Architekturspezifikation einer Steckplatzkodierung und eine Zuordnung von Konfigurierungsdaten.

Die Steckplatzkodierung und die Zuordnung von Konfigurierungsdaten für eine Baugruppe 1 erfolgt mittels eines EEPROM 2, auf dem eine zugeordnete Steckplatznummer 3a und Konfigurierungsdaten 3b, eine Teilnehmernummer 4 und eine MD4-Signatur 5 und gegebenenfalls weitere Daten, beispielsweise Stromfensterdaten, gespeichert sind. Der Datensatz für das EEPROM 2 wird über eine I2C-Schnittstelle 6 geladen. Weiterhin ist das EEPROM 2 mit einer Stromversorgung 7 und einem seriellen I2C-Bus 8 verbunden. Über den I2C-Bus 8 liest die Baugruppe 1 den Datensatz und überprüft diesen zweikanalig anhand der MD4-Signatur auf Datenintegrität. Danach wird der Datensatz ohne MD4-Signatur an die Abbildspeicher eines zweikanaligen Mikro-Controllers 9 weitergeleitet. Da die Steckplatznummer 3a und die Konfigurierungsdaten 3b auf dem EEPROM 2 durch die MD4-Signatur 5 abgesichert sind, kann die Datenintegrität auf sehr hohem Sicherheitsniveau gemäß der Sicherheitsanforderungsstufe SIL 4 nach CENELEC überwacht werden.

## Patentansprüche

1. Verfahren zur Zuordnung einer Steckplatznummer und von Konfigurierungsdaten zu einer Baugruppe (1) für sicherheitsrelevante Bahnbetriebsprozesse,
**dadurch gekennzeichnet,**
**dass** ein Datensatz, bestehend aus der Steckplatznummer (3a), den Konfigurierungsdaten (3b) sowie einer Teilnehmernummer (4) und gegebenenfalls weiteren Daten, insbesondere Stromfensterdaten, gebildet wird, wobei ein Sicherungsanhang über den gesamten Datensatz gebildet wird und der Datensatz samt Sicherungsanhang über eine serielle I2C-Schnittstelle (6) in einen nichtflüchtigen Speicher eingelesen wird, und dass die Baugruppe (1) den Datensatz über einen I2C-Bus (8) liest und zweikanalig mittels des Sicherungsanhanges auf Datenintegrität überprüft.

2. Vorrichtung zur Durchführung des Verfahrens nach Anspruch 1,
**dadurch gekennzeichnet,**
**dass** ein nichtflüchtiger Speicher mit einer seriellen I2C-Schnittstelle (6) vorgesehen ist, wobei die Steckplatznummer (3a) und die Konfigurierungsdaten (3b) sowie eine Teilnehmernummer (4) und gegebenenfalls weitere Daten, insbesondere Stromfensterdaten, als Datensatz mit einem Sicherungsanhang über die I2C-Schnittstelle (6) in den Speicher einlesbar sind,
**dass** der Speicher über einen I2C-Bus (8) mit der Baugruppe (1) verbunden ist und
**dass** die Baugruppe (1) Mittel zur zweikanaligen Überprüfung des Datensatzes auf Datenintegrität mittels des Sicherungsanhanges aufweist.

3. Vorrichtung nach Anspruch 2,
**dadurch gekennzeichnet,**
**dass** der Sicherungsanhang als MD4-Signatur (5) über den gesamten Datensatz ausgebildet ist.

4. Vorrichtung nach Anspruch 2 oder 3,
**dadurch gekennzeichnet,**
**dass** der Speicher als EEPROM (2) ausgebildet ist.

## Claims

1. Method for allocating a plug-in slot number and configuration data to an assembly (1) for safety-relevant railway operating processes,
**characterized in that**
a data record, comprising the plug-in slot number (3a), the configuration data (3b) as well as a subscriber number (4) and, if required, further data, in particular current window data, is formed, with a safety attachment being formed over the entire data record, and with the data record being written, together with the safety attachment, via a serial I2C interface (6) to a non-volatile memory, and **in that** the assembly (1) reads the data record via an I2C bus (8) and checks it, on two channels, for data integrity by means of the safety attachment.

2. Apparatus for carrying out the method according to Claim 1,
**characterized in that**
a non-volatile memory having a serial I2C interface (6) is provided, in which case the plug-in slot number (3a) and the configuration data (3b) as well as a subscriber number (4) and, if required, further data, in particular current window data, can be written to the memory as a data record with a safety attachment via the I2C interface (6),
**in that** the memory is connected to the assembly (1) via an I2C bus (8), and
**in that** the assembly (1) has means for two-channel checking of the data record for data integrity by means of the safety attachment.

3. Apparatus according to Claim 2, **characterized in that** the safety attachment is in the form of an MD4 signature (5) over the entire data record.

4. Apparatus according to Claim 2 or 3, **characterized in that** the memory is an EEPROM (2).

## Revendications

1. Procédé d'affectation d'un numéro d'emplacement d'extension et de données de configuration à un module (1) destinés à des processus de trafic ferroviaire importants pour la sécurité,
**caractérisé en ce que**
l'on forme un ensemble de données, constitué du numéro d'emplacement d'extension (3a), des données de configuration (3b) ainsi que d'un numéro d'utilisateur (4) et éventuellement d'autres données, notamment des données de fenêtre de courant, un supplétif de sécurité relatif à tout l'ensemble de données étant formé et l'ensemble de données étant lu conjointement avec le supplétif de sécurité par le biais d'une interface série I2C (6) dans une mémoire non volatile, et **en ce que** le module (1) lit l'ensemble de données sur un bus I2C (8) et en vérifie l'intégrité des données sur deux canaux au moyen du supplétif de sécurité.

2. Dispositif destiné à mettre en oeuvre le procédé selon la revendication 1,
**caractérisé en ce que**
il est prévu une mémoire non volatile dotée d'une interface série I2C (6), le numéro d'emplacement d'extension (3a) et les données de configuration (3b) ainsi qu'un numéro d'utilisateur (4) et éventuellement d'autres données, notamment des données de fenêtre de courant, peuvent être lus dans la mémoire, par le biais de l'interface 12C (6), sous la forme d'un ensemble de données comportant un supplétif de sécurité,
la mémoire est reliée à un module (1) par un bus I2C (8) et
le module (1) comporte des moyens permettant de vérifier sur deux canaux l'intégrité des données de l'ensemble de données au moyen du supplétif de sécurité.

3. Dispositif selon la revendication 2,
**caractérisé en ce que**
le supplétif de sécurité est conformé en signature MD4 (5) dans tout l'ensemble de données.

4. Dispositif selon la revendication 2 ou 3,
**caractérisé en ce que**
la mémoire est conformée en EEPROM (2).
